Europäisches Patentamt

European Patent Office

Office européen des brevets

(19)

(11) **EP 1 734 255 A1**

(12) **EUROPEAN PATENT APPLICATION**

(43) Date of publication:
**20.12.2006 Bulletin 2006/51**

(51) Int Cl.:
***F03B 13/26*** *(2006.01)*

(21) Application number: **06386014.2**

(22) Date of filing: **26.05.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **27.05.2005 GR 2005100262** | (71) Applicant: **Thalassia Michaniki AE**<br>**19500 Lavrio (GR)**<br><br>(72) Inventor: **Daskalakis, Antonios**<br>**155 61 Holargos (GR)** |

(54) **Wave energy converter**

(57)    The invention refers to a system for producing electricity based on the sea waves, with capabilities of exploiting at the same time other renewable sources of energy (solar, wind, daily difference of temperature etc.)

The system is based on the wave energy transformers (WECO) which produce compressed air at various compression pressures exploiting the periodical movement of the water in the wave field.

The produced air at the WECO is expanded in air turbines for the production of electricity, while its energy content is enhanced from other sources of energy through heat exchangers.

The system of the oscillating body columns is materialised with pipes which are installed vertically inside a platform (carrier) in intensive floatation anchored with vertical anchoring lines.

Basic element of the system is the capability for intermediate storage of the air in air tanks installed in the water at or near the sea bottom and the capability for exploiting the daily difference of temperature.

The system functions as a wave absorber. Joint with similar construction units of wave absorber it can at the same time function as a means for protecting sea areas or installations from the waves.

Figure 22.

Printed by Jouve, 75001 PARIS (FR)

EP 1 734 255 A1

**Description**

The present invention refers on the development of a system for electric energy generation based on wave energy utilization, capable of simultaneous exploitation of other types of energy, like solar and wind, as well as of the amount of energy entrapped in the water masses and/or in air masses of the atmosphere.

The system is based on **units of wave energy transformation**, that produce compressed air from the periodical movement of water in the wave field. The units consist of Oscillating Body Columns - OBC, an improved development of the Oscillating Water Columns —OWC system. The OBC can function in the same way as the conventional OWC, that is to say to produce compressed air with the movement of a body inside the column, but they can however be provided with a piston that compresses the air in pressures considerably higher than those that can be achieved in a simple column.

The columns can collect big quantities of air in various degrees of compression. They use the collected air as the a kind of **energy underlay onto** which energy from other sources, as is the solar and the energy that comes from the daily difference of temperature, the heat that is found entrapped in the masses of sea water etc, is gathered. The air, with its strengthened energy content, is expanded inside air-turbines that, in turn, transform the accumulated energy into electric form.

The Oscillating Body Column (OBC) system is materialised with cylinders that are installed on a platform which serves as the vehicle carrying the whole system and which is under "**intensive flotation**", similar to that developed inside the enterprise for other applications like the **floating wave absorber.** Inside the cylinders is placed a body that floats and oscillates, following the oscillation of the water, functioning as a piston and pushing masses of air that are entrapped in the cylinders, increasing their pressure and via air ducts filling an intermediate air storage tank, per group of cylinders.

The Wave Energy Converter (WECO), that is proposed here, consists of a column of oscillating weight that instead of using the body as a piston, for the compression of air, it drives a smaller piston, through a revolution multiplier, inside a compression cylinder which produces smaller quantities of air, but at higher pressures, with the same or even higher energy content.

The air masses gathered inside the intermediate air tanks pass through a heat exchanger, which is fed with hot water or other heating means heated in solar cells, and are expanded in an air-turbine producing electric energy.

The system can, alternatively or in combination with the solar energy, use a heat pump that exploits the temperature difference between bottom and surface of sea, supply the heat exchanger for the heating of air and increase its energy content before it is expanded in the air-turbines.

**The capability of using the air that is produced in the water columns as an energy under layer and to enhance its energy content by increasing its temperature or its pressure with the contribution of other renewable energy sources, constitutes an innovative characteristic element of the proposed system.**

The proposed system is developed in way that it can store part of the produced energy, in the form of compressed air, stored in air tanks, preferably installed in the seabed, in pressure that equals the pressure of the water in the seabed, for reducing the required volume of storage, while, then, it uses the pressure of water in the seabed for the expansion of stored air in the high pressure air-turbines.

The capability of storing compressed air in air tanks inside the water at or near the seabed is equivalent with storing energy during a period of low electricity demand or during periods of dense wave energy availability and using this energy during periods of high demand.

The storage of air inside the sea water, with, in general, lower temperatures, decreases its temperature, further decreasing the required storage volume, rendering technically possible the manufacture of air tanks with technical and economical viability. The low temperature in the bottom of sea decreases however the air energy content.

Aiming at the recovering of the energy content, at the phase of expansion of the stored air in the air-turbines, this is led through heat exchangers. The heating of the air is achieved in water-air and air-air exchangers, where, as means of heating is used air of the atmosphere (environment), can however besides be used exchangers of water - air, where as thermal means is used water or other suitable means that is heated in solar cells.

**The capability of partial and temporary storage of the produced energy in the form of compressed air and its use at more suitable periods of the day constitutes a basic characteristic of the proposed system.**

The periodical movement of the water that oscillates in the water columns can only compresses the air few tenths of an atmosphere above the atmospheric pressure. The air storage in air tanks inside the sea water and in depths of 20-.30 metres or more requires pressure of 2 to 3 bars or even more, which is not achievable in the classic water column.

In the proposed system, as it was mentioned before, the water columns are replaced by body columns that, even in this form, can achieve compressions higher than those achieved in a simple water column. The weight column, however, can constitute the base for building a system of high air compression, functioning as a compressor with the ability of producing compressed air, in smaller quantities, but in pressures that are required for the air to be stored in air tanks inside the water.

**The system of compressed air production, as it is proposed in the present invention and which consists of the basic unit of wave energy transformation, the WECO, constitute the basic innovative element of the proposed system.**

The quantities of air that are produced in the oscillating body columns are big and their storage in air tanks, require very big volumes. Moreover the air tanks accomplish also another basic operation. They let the water pressure to operate on them injecting the air to the high pressure air-turbines when the phase of air expansion takes place for the production of electric energy.

In the proposed system, the air tanks consist of big balloons, similar to those used for the hoisting of big objects in the sea, as in pulling up shipwrecks, transport of gravity anchors etc. The balloons are anchored in the bottom of the sea, near the installation and the air is compressed inside them, overcoming the water pressure. Anchoring is achieved with gravity anchors or with piles depending on the conditions.

**The proposed Air tanks, of balloon type, constitute a basic innovative element of the proposed system.**

The storage of air in air tanks inside the water provides a capability of exploitation of an additional renewable energy source that can be proved particularly important. This source consists of the daily difference of temperature in the surface of ground which varies from region to region, but in general, exceeds the 10°C and in certain cases reaches the 15 °C, all year round.

The system in this form of operation produces compressed air with the help of the wave energy and it stores it in air tanks at the seabed, similar to those that were described previously. The phase of storage takes place at the first morning hours, the period with the lower atmospheric temperatures, covering the available storage capacity. At the hours with higher atmospheric temperatures the stored air is expanded in the air turbines after it recovers the temperatures of the environment via heat exchangers, as it was mentioned before. In this phase the water columns continue producing compressed air, which is expanded in air turbines either on their own or after mixing with the stored air.

**The exploitation of the daily difference of temperature for enhancing the produced electrical energy constitutes a basic innovative characteristic of the proposed system.**

The exploitation of the renewable sources of energy constitutes today a peak effort in the direction of guaranteeing sufficient energy resources while confronting the huge environmental problems created from the combustion of hydrocarbons and in general mineral fuels.

Renewable sources of Energy include three basic groups i.e. Solar Energy, Wind, and the Sea.

In the first group the peak effort today is in the technology of photovoltaic arcs that produce electric energy directly from the solar radiation. The technology of the photovoltaic arcs is today very promising but the cost (cost per unit of energy) remains its basic disadvantage.

In the second group, the wind energy, the technological developments have allowed the competitive production of electric energy and already many countries cover a significant amount of their energy needs from the wind.

In the third group, the sea, there are included three basic sources, i.e., the energy of waves (kinetic and dynamic), the energy of tides and the thermal energy that is stored in the enormous masses of water. From the last the only recoverable part of energy is the "differential energy" due to the difference of temperature of the water between the sea bottom and the surface of the sea.

In the renewable sources of energy, the basic cost is the capital cost i.e. the cost of the required installations, while the cost of the "fuel" is provided free of charge. On the contrary in the classic industry of production of electric energy that dominates today, with the combustion of both solid and liquid fuels, the fuel constitutes the basic cost. In fact the basic differences between the two lie in the following:

In the renewable sources the energy recoverability is small in all source categories.

The cost of investment, consequently, is distributed in small quantities of produced energy rendering cost per unit of produced energy very high.

Contrary to the classic energy industry, where the produced quantity of electricity is monitored against demand, in the renewable sector the produced energy cannot be monitored since the availability of energy is an unforeseen parameter consisting more or less a stochastic phenomenon not in line with the demand.

The uncontrolled character of energy production, in the renewable sector, in combination with the limited storage capabilities puts the renewable energy sector as a supplemental to classic sector and it will remain supplemental for as long as its basic weaknesses connected with its character and the today's level of technology, remain unsolved.

An important advantage of petroleum industry and of the oil as a source of energy constitutes its use in transportation. The high-energy content of oil and its derivatives (petrol etc) allow small quantities of fuel, stored in the car's reservoir to give satisfactory autonomy and a highly acceptable behaviour of the engine. The combustion, however, of oil and its derivatives in internal combustion engines constitutes the more serious burden to the environment of big cities of the world and a serious threat for the quality of life of millions of people. As an alternative solution it has been proposed the electrical drivers focusing in the production of batteries with a high storage capacity and small weight, but this has not been achieved as yet. Today it appears, as an important possibility, the combustion of hydrogen in hydrogen cells.

However a problem requiring solution is the method of producing hydrogen in a cheap way. The renewable sources of energy can constitute the solution to this problem, solving at the same time the above mentioned problem associated with them i.e. the small capability for energy storage.

Sources of Ministry of Energy of USA give the following comparative picture of cost of produced energy from different technologies and different types of fuel. Energy produced from a big scale installation, burning coal, has a cost of roughly 2 cents per KWh, while a unit of Combined Circle of natural gas gives cost roughly 3 cents per KWh. In nuclear power stations of production the energy is given with cost little under the 2 cents per KWh, without, however, taken into consideration the cost of permanent deposition of nuclear fuel.

Concerning the above mentioned statistics of cost, energy produced from wind costs roughly 4.5 cents per KWh, while a unit producing electricity from the waves, installed in Great Britain, is evaluated with cost roughly 7.5 cents per KWh.

Some additional data, from the same source, reveal deeper characteristics of the different methods of production of electricity, characteristics that can determine future developments.

The cost of investment for one unit of production of electric energy with coal as fuel amounts roughly 2 million USD/ MW, in a nuclear power station, the cost amounts, roughly, 3 million USD/MW, while a station of natural gas, amounts roughly 550.000 USD/MW. In wind parks and in stations of production of energy from waves the corresponding cost oscillates between 1.2 and 1.6 million USD/ MW.

The energy of waves is a function of their characteristics and is given by the following relation:

$$E = 1/8\ \rho\ gH^2 \tag{1}$$

Where:

   $E$ = the energy (dynamic and kinetic) per square metre of sea surface (in joules)

   $\rho$ = the density of water (Kg / m$^3$)

   $g$ = the acceleration of gravity (m/sec$^2$)

   $H$ = the wave height (m)

Relation (1) gives the energy in joule per square metre of surface of sea. The following relation gives the power passing through a wave trough per meter of length:

$$P = \tfrac{1}{2}\ EC \tag{2}$$

Where:

   $P$ = the power per meter of wave length (W/m)

   $E$ = the energy from relation (1)

   $C$ = the wave celerity

Using relations (1) and (2) it is possible to estimate the wave energy potential of a region provided that data regarding the long-lasting climate of the region is known as well as its geographical characteristics.

Table 1 provides estimates of energy and power per unit in various characteristic conditions of waves (height of wave H and period of wave T).

**Table 1. Quantity of energy per sq.m. and power per wave unit of length**

| H | T | C | L | E | P | P |
|---|---|---|---|---|---|---|
| m | sec | M/sec | M | Joule/m2 | W/m | MW/Km |
| 1.0 | 4 | 6.24 | 60.7 | 1,257 | 3,922 | 3.9 |
| 1.0 | 5 | 7.8 | 94.9 | 1,257 | 4,902 | 4.9 |
| 1.5 | 4 | 6.24 | 60.7 | 2,828 | 8,823 | 8.8 |
| 1.5 | 5 | 7.8 | 94.9 | 2,828 | 11,029 | 11.0 |
| 1.5 | 6 | 9.36 | 136.7 | 2,828 | 13,235 | 13.2 |
| 2.0 | 5 | 7.8 | 94.9 | 5,028 | 19,608 | 19.6 |
| 2.0 | 6 | 9.36 | 136.7 | 5,028 | 23,529 | 23.5 |
| 2.5 | 5 | 7.8 | 94.9 | 7,856 | 30,637 | 30.6 |
| 2.5 | 6 | 9.36 | 136.7 | 7,856 | 36,765 | 36.8 |
| 2.5 | 7 | 10.92 | 186.0 | 7,856 | 42,892 | 42.9 |
| 3.0 | 6 | 9.36 | 136.7 | 11,312 | 52,941 | 52.9 |
| 3.0 | 7 | 10.92 | 186.0 | 11,312 | 61,764 | 61.8 |

From table 1 it is obvious that the available energy in the wave field is very large and that the effort of recovering it is imperative in a continuous effort to face the problems of environmental pollution and the enormous problems of growth and survival of the planet.

Certain estimates amount the quantity of energy that is found entrapped in the waves that approach the coasts of the planet in 2-3 millions of MW, while other appreciate that this is the second, after direct solar energy, reservoir of clean energy of the planet.

In the sector of wind energy the technological developments have gone up the attribution of installations leading to total reduction of cost per unit in levels, if no competitive, at least satisfactory from the point of view of cost so that they are commercially exploitable.

On the contrary in the exploitation of wave energy the technological developments are found very much behind the level that can impose it as a competitive and a commercially exploitable affair.

An important reason for that is the difficult environment of sea and in particular the bad conditions in which an energy production installation has to function, a fact that considerably increases costs. The high cost of installations in combination with the low density of energy recovering, increase the cost per unit of produced electric energy in levels not commercially exploitable.

For the transformation of energy of waves to electricity, there have been proposed various inventions which can be categorized in as follows:

**Offshore Devices or Devices that can be installed on the coast.**

The **Tapchan device** (Tapered Channel device) is given in sketch 1 and consists of a channel of progressively decreased cross-section open to the sea. The channel allows the passage of water as the waves reach the beach and gathers it in a reservoir. The water drives a hydro-turbine that produces electric energy.

The device of **Oscillating Water Columns** (sketch 2) consists of a structure open to the sea under the surface of water. The structure encompasses a column of water and above it a column of air. As the level of water increases in the column, under the effect waves, it forces the air to move creating an air stream, which moves an air turbine to produce electric energy. As the water withdraws, in the phase of the downward movement of the wave, air is sucked inside the column in a repetitive circle. An air-turbine has been proposed that turns to the same direction independent of the direction of flow of air exploiting both phases of oscillation of inside the column.

The device **Pendulor**, sketch 3, consists of an orthogonal structure open to the sea in one side. In the opening a hinged door is suspended, which moves like a pendulum under the effect of waves. The movement drives a hydraulic pump and a generator to produce electricity.

**Devices of open sea**

In this category they are included appliances that are intended to work in coastal regions as well as in deep waters. Among them is the Swedish Hosepump, the McCabe Wave pump that exploits the relative movement of three pontoons, sketch 4, in order to drive a hydraulic pump and a generator to produce electricity in the same way as the device Pendulor. The floating Wave Power Vessel, sketch 5, that works with a way similar with the TAPCHAN device, but on a floating platform in order to overcome the problems associated with tides that are present in the coast.

From the devices that have been proposed the most promising one appears to be the Oscillating Water Columns, while the key in their success constitutes the development of "Wells Turbine ". As it was mentioned before the turbine is self-tuned in the sense that it turns to the same direction independent from the direction of the air flow. However its efficiency is lower than a traditional unidirectional turbine. In low speeds of air the turbine requires spending of energy in order to continue turning, while in higher air speeds turbulence is developing around its fins and its efficiency falls dramatically.

A very serious problem that is related with the OWC is their cost of installation in coastal areas. The construction should be very strong in order to withstand the breaking wave forces and the cost goes up dramatically. At the same time the choice of the area of installation is restricted since the coast should be suitable to accept the waves, while the environmental problems arising are of great importance with the permanent structures required in the coastal area.

Associated with the above are also the problems of tides present in many regions and which do not allow the continuous operation of such a unit or otherwise require big installations of high cost in order to ensure their continuous operation under all the conditions of level of sea.

It should be noted that the way an OWC has been proposed to work, in parallel with an air turbine, requires that each column is of sufficient size so that it is capable of producing sufficient quantities of energy. That means a system with a small number of columns, each of big size.

In addition to the above observations the general weaknesses mentioned above regarding the renewable sources of energy are also present here. The inability to monitor the supply of "fuel" in combination with little capability of storage of the produced energy and the low density of energy production due to the low degree of energy recovering from its natural source.

The present invention aims to propose the development of an innovative system capable of producing electric energy, which instead of the Oscillating Water Columns (OWC) proposes the Oscillating Body Columns (OBC) and finally the Wave Energy Converters (WECO) and which seeks the following distinguishable objectives:

1. To drastically decrease the cost of the platform on which the columns are installed. Actually the platform that is proposed here has been developed with possibilities of multiple uses in various applications and mainly with possibilities of installation in medium to very deep waters and in open seas. The platform has the form of a body under intensive flotation with vertical anchorage lines and its description is given in the next.

2. To create a platform with an inherent flexibility to be used simultaneously for different applications, so that the construction costs are distributed to other uses in addition to energy production. Basic such uses constitute the protection of coasts from waves, the creation of protected sea areas for marinas, fishing ports and anchorages, the creation of open sea fishing farms, the protection of marine installations, as oil platforms etc. The proposed platform can serve the above different roles. The proposed device, in parallel with energy production, acts as a wave-absorbing cell.

3. To drastically increase the density of electricity production from each installed unit, with the improvement of the degree of energy recovering from multiple sources mainly from the waves but including solar energy, wind energy etc in a hybrid unit of energy production. The proposed unit has completely the character of hybrid since it uses as a basis the compressed air that is produced in the OBC under the effect of waves, strengthening, however, its energy content, before its expansion in the air turbines, exploiting the energy of sun, wind, the entrapped energy in the sea water and the daily difference of temperature.

4. To overcome the problems that are related with the double action air turbine, creating a unidirectional system in association with a unidirectional air turbine, which is more effective with higher degrees of performance, which, however, has all the advantages of the double action. In the proposed system both phases of the water oscillation are exploited, it is happening however **in the phase of air compression and not in the phase of expansion.**

5. To create capabilities of storage of the produced energy in the form of compressed air in air tanks in the sea bed, exploiting the low water temperatures to reduce the required storage volume and exploiting the water pressure to produce a system of constant pressure.

The reduction **of cost of the** installation, the increase **of power** per unit with the increase **of degree of output** with the simultaneous exploitation of **multiple sources of** energy, the use of the installation itself for other uses at the same time, such as the protection from the waves and the capability of energy storage that is produced from the waves, constitute the basic innovative elements of the proposed invention.

The proposed system is modular, it can be produced in standardized modules that can be connected together longitudinally and in parallel, in a way that can cover a given area of interest either for enhancing the energy exploitation or achieving other aims i.e. coastal protection, creation of port facilities etc.

The proposed system can function autonomously, producing energy that will be consumed locally, or it can constitute units connected in the network via which they channel the produced energy. In this way, a wave absorber aimed to protect a port, can produce energy for the needs of the port covering partially or even totally its needs. Similarly a fishing farm in the open sea can constitute a completely self-reliant unit also from the energy point of view.

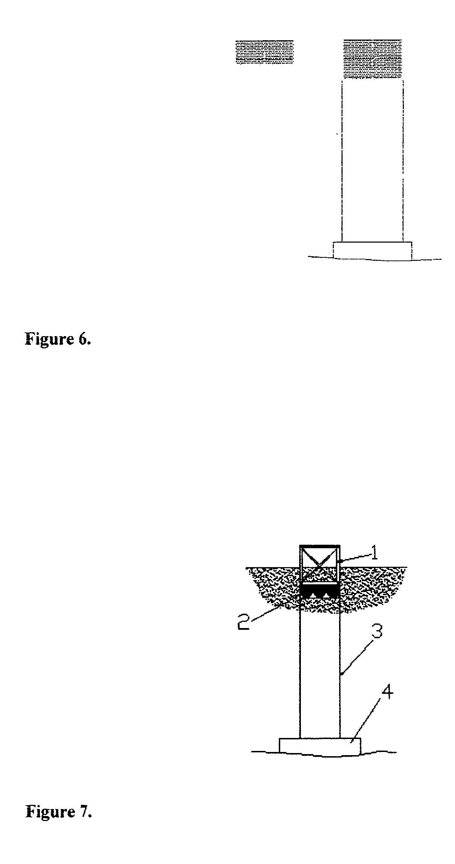

Figures 6 and 7 give a typical form of the platform of the proposed system. The platform constitutes a body in intensive flotation that means it is functioning with excess buoyancy in combination with vertical anchorages under tension (tension leg). In the particular case the platform is materialised as a steel network (1), the system of buoyancy (floaters) (2), which in a condition of complete immersion produce buoyancy in excess of the weight of the structure, the weight of the equipment and the payload, the anchoring lines (3) and the anchors of gravity (4). The body in this condition functions as an inverted pendulum with natural periods which are found to be outside the band of wave periods. In addition, as it is analysed in [1] the natural period can be tuned in such a way so that the whole installation is found outside the region of big wave effect.

The above-described platform was developed in order to carry wave absorbing cells aiming at the creation of a system of protection from waves, the **floating wave absorber,** which has been patented by Martech Engineering. S.A. As it can be seen in fig. 7 the platform, on its own, presents a very small water line area and the wave forces exerted on it are very small.

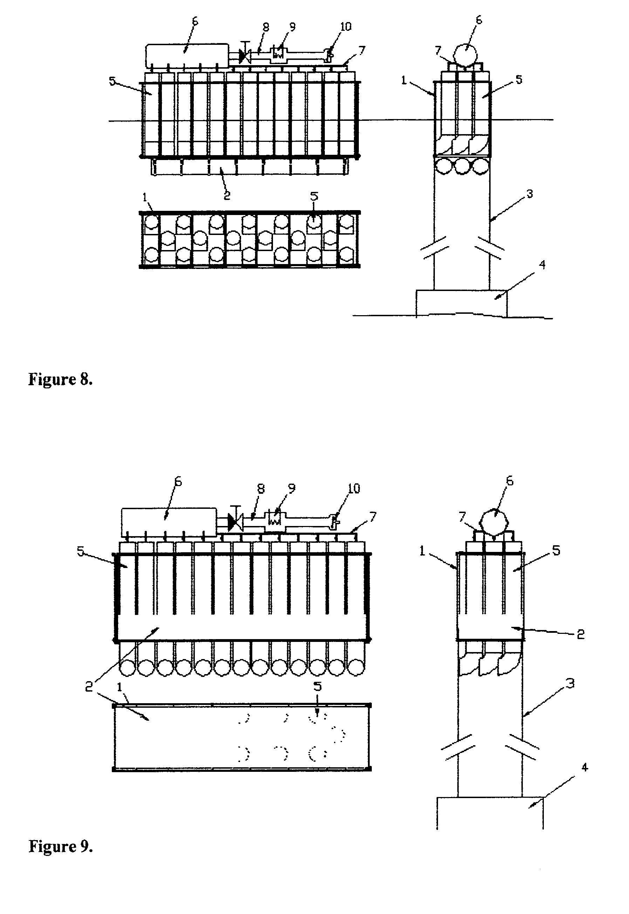

Figure 8 gives a general arrangement of a module producing compressed air. The module consists of the platform described above and which carries columns producing compressed air (5), air tank for intermediate air collection (6) and the acossiated air ducts network (7), air duct (8) to lead the air to expand in the air turbine (10), heat exchanger (9) for heating the air from additional energy sources, such as solar and an air turbine (10) in which compressed air is expanded to produce electricity.

Figure 9 gives an alternative arrangement in which the floater is formed like a cell in a way that the columns pass through it. The arrangement allows columns of big height, which can exploit in a better way the big waves and the dynamics of the body oscillating inside them. This is of very importance since, as it is mentioned in the next, under certain circumstances the amplitude of the body motion is bigger than the amplitude of the wave itself.

The columns can be the type OWC, OBC or WECO.

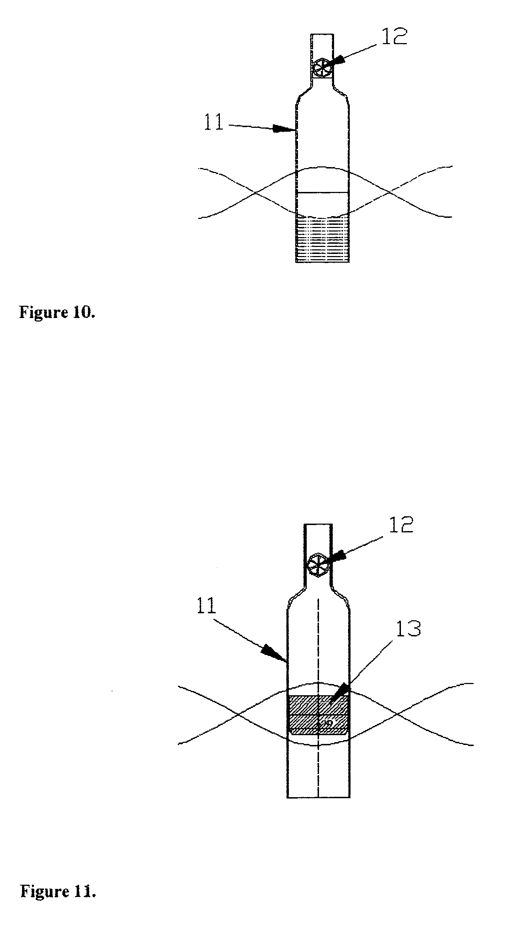

Figure 10 gives the form of OWC of direct expansion in an air turbine. The column is materialised with a pipe semi immersed in the water (11), open at its lower end, inside which the water is fluctuating under the effect of the wave field. The water acts as a piston activating the air which is above it inside the tube. The movement of the air drives an air turbine (12) which in turn produces electricity. In this arrangement the turbine should be a Well's turbine which is designed to turn in the same direction, irrespective of the direction of the blowing air, so that both phases of the wave motion are exploited.

Figure 11 gives the form of a column similar to the OWC, described previously, where the role of the piston plays a body (13) that floats inside the tube and which moves periodically under the action of the wave field. Preliminary studies have shown that under certain circumstances the body can be more effective in its role as a piston compared to the water. The improved effectiveness is due to the fact that the amplitude of the body motion is a function of the body mass and the characteristic period of the wave. With proper conditions the dynamic response of the body presents resonance phenomena and capability for producing larger quantities of compressed air and at higher pressures compared to the simple OWC. This leads to higher levels of wave energy extraction, i.e. to higher degree of effectiveness.

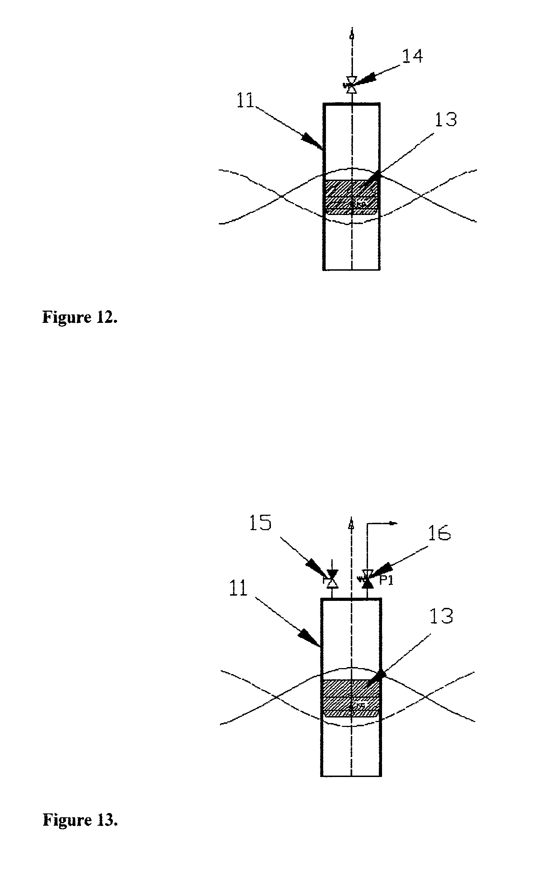

Figure 12 gives a different form of an Oscillating Body Column (OBC). The tube (11) at its upper end is cupped on which valve (14) is fitted. The body (13), as it moves, produces an airflow through the valve leading to loss of energy. In this form the column acts as a **wave energy-absorbing cell,** which makes it proper to work in the wave absorber system.

In figure 13 the previously described column (11) carries two non-return valves (15) and (16). The first valve, (15), opens when the body moves downwards sucking air from the environment into the air chamber of the column. During the upward movement of the body the first valve (15) is shutting while the second (16) is opening, through which and duct (17) air is compressed into the air tank. The second valve can be tuned so that it opens at a certain pressure $P_1$. The optimum pressure $P_1$ depends on the characteristics of the tube and its dimensions, on the characteristics of the body, which oscillates (mass), but also on the characteristics of the waves (height and period). $P_1$ can be predefined based on the data of the tubes which are defined for a certain design of the system and on the long term forecasts of the waves prevailing in the area of installation. However it can be variable and be tuned automatically based on a controller and on sensors that measure the waves, installed in short distance from the installation in a location undisturbed by the presence of the installation. $P_1$ can simply be the pressure that prevails into the air tank (6) and valves (16) open when pressures are equal at the two sides.

In all previous cases the quantity of air that can be produced in a column is very large, the pressure, however, which can be achieved, is low. In a column of the form of figure 10 which is materialised by a tube of 800 mm in wave conditions of 1.5 m height and wave period 4 sec, the quantity of produced air can reach 450 $m^3$/h, the pressure however is under 0.15 bar.

The simple columns, with the direct expansion, which are given in figures 9 and 10 exploit both phases of oscillation producing double quantity of air, in comparison with the column of figure 7, however they present the disadvantages mentioned before about the low degree of effectiveness of the double action turbine.

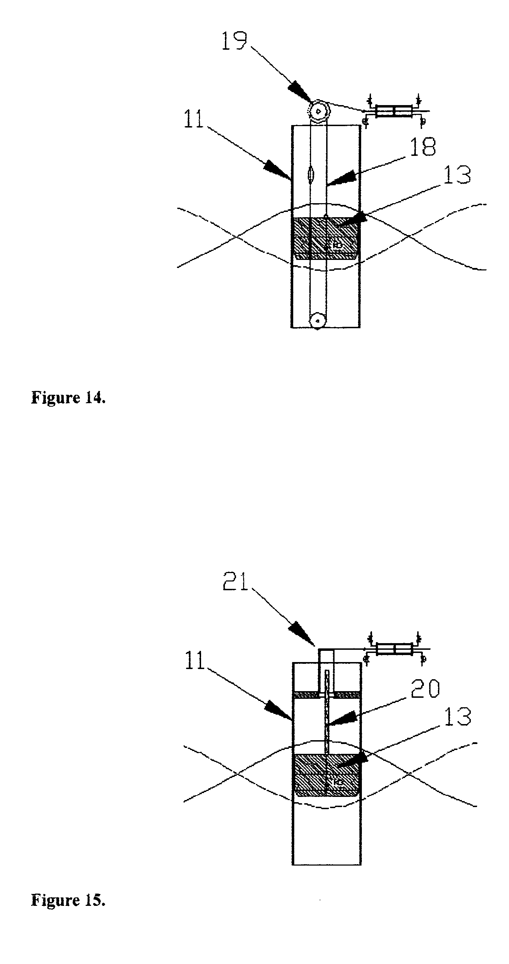

Figures 14 and 15 give two different forms of the wave energy converter (WECO). In both cases the oscillating movement of the body inside the column, under the action of the wave, is transformed into rotating motion either through the movement of the wire (18), which acts like a belt retrograding under the movement of the body and which drives a pulley (19), in the case of figure 14, or through an endless screw (20) which drives a horizontal disk (21), in the case of figure 15. If $a_1$ is the amplitude of the periodical movement of the body, the number of turns of the pulley in half a period will be $n_1$, with $n_1$ given from the relation:

$$n_l = a_l/\pi d$$

The disk changes direction of turning when the body change phase of movement.

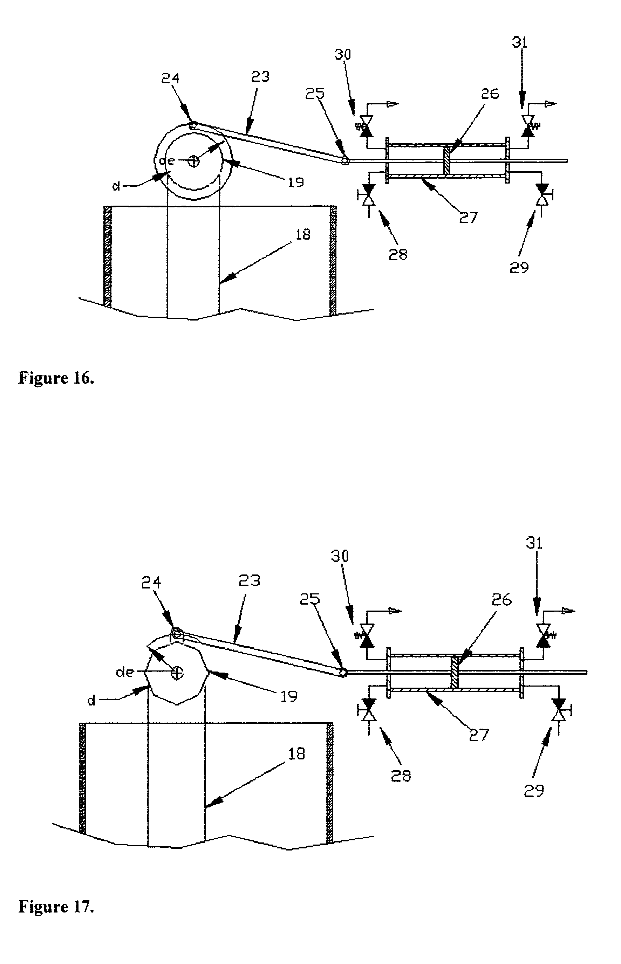

As it is shown in figure 16, outside the pulley (19), on a disk (22), permanently connected with it with a diameter $d_e$, a piston rod (23) is fixed, which transforms the circular movement of the disk to a retrograding one driving a retrograding pump of double action.

Instead of the disk the piston rod can be connected with a device of a crank type (24), as it is shown in figure 17. The piston rod though the articulated connection (25) moves a piston (26) inside a housing (27) similar to an air compressor. The housing (27) forms the chamber of compression. For each total revolution of the pulley and therefore of the disk (22) or the crank (24) the pump performs two complete embolisms. At the moment the pulley changes direction of rotation it is possible that a small part of the embolism can be lost depending of the position of the piston. Therefore the number of embolisms per wave period should be

$$e = 2n\ 1\ = 2nd\ 1\ /\ p\ d. \qquad (4)$$

The pump bears non return valves of inlet (28) and (29) and outlet (30) and (31) at the two sides of the piston. The inlet valves open when the piston, as it moves creates under pressure in the corresponding part of the air chamber, while they close in the other part in which the pressure rises. Reversely, the outlet valves open, via which the air is led in the intermediate air tank. The outlet valves are regulated and they open in the pressure $P_1$ which was mentioned before.

In the mechanism that was described before the complete travel of the piston is equal to the diameter $d_e$ of the disk and the volume of ramming is equal with $Ve = A. d_e$, where A is the cross section area of the chamber of the reciprocating pump. Consequently when the weight that floats in the column executes a complete period the produced air volume Vs in the reciprocating pump is equal with

$$Vs = e.Ve = 2.A.d_e.a_l\ /\ \pi\ d \qquad (5)$$

In the above described device an additional device can be fitted to increase the number of revolutions per period in a way that the volume of the produced air increases. However the critical matter is not the volume of the air but the quantity of energy extracted from the wave.

Critical dynamic parameters which define the functioning of the system consist of the characteristics of the body movement inside the column and as was described before the amplitude $a_1$ and the period T of its oscillation. These parameters are a function of the characteristics of the wave and the body mass. In a harmonic wave with amplitude $a_0$ and period T, the differential equation that describes the body motion is written:

$$m.\frac{d^2z}{dt^2} = F_w(t) + F_e(t) \qquad (6)$$

Where:

M is the mass of the body

z = z (t) the vertical motion of the body

$F_w(t)$ the force exerted on the body by the water

$F_e(t)$ the force exerted on the body from the wire or the endless screw

In the above equation (6) the term $F_w(t)$ includes the gravity force (due to the body mass) and the hydrostatic forces which express simple equilibrium in calm water at a draught $h_T$.
The equation that describes the harmonic wave is given by the following relation:

$$n(t) = a_0. \cos(\omega t) \qquad\qquad (7)$$

Where:

$n(t)$: the water elevation with time

$a_0$: the amplitude of oscillation of the unobstructed water

$\omega$: The frequency of the wave ($\omega = 2\pi/T$)

The motion of the body inside the column will be periodical with basic period that of the wave T and it will be described by a Fourier series of trigonometric form. For the simple body without the belt to transfer the movement to the reciprocating air pump the equation is simplified as follows:

$$n_l(t) = a_1.\cos(\omega t + \varphi) \qquad\qquad (8)$$

Where:

$a_,$: the amplitude of the body oscillation

$\varphi$: the phase lag

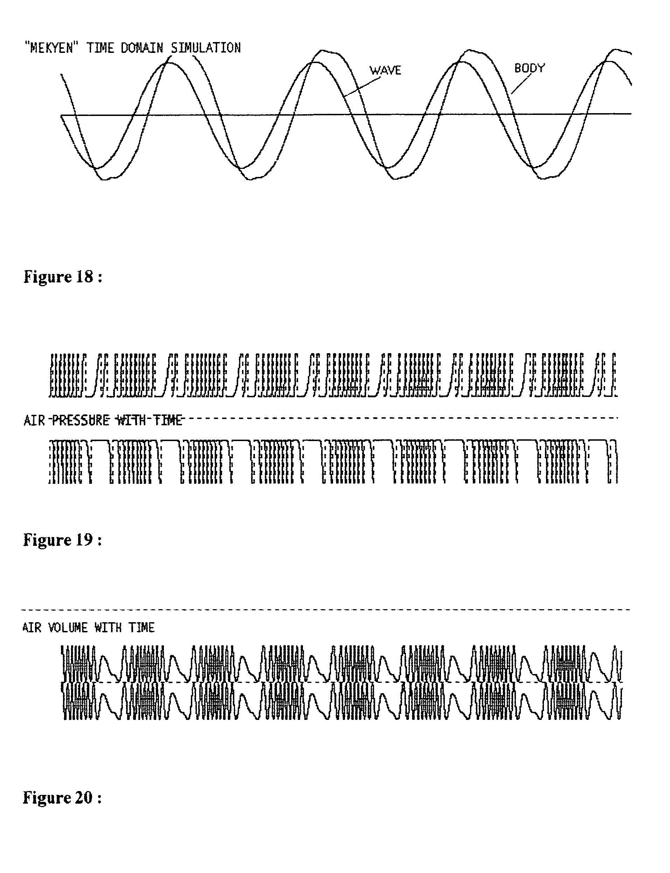

The motion of the body that constitutes the drive mechanism of the reciprocating pump is complicated. Figure 18 gives a wave record in time domain and the respective record of the body motion as it was given by a time domain simulation program written for the study of the system.
Figures 19 and 20 give respectively the variations in time of the pressure and volume at the two parts of the chamber of the reciprocating pump.
The amplitude of oscillation $a_1$ is a significant parameter of the WECO and it is a function of the geometric characteristics of the system.
The following geometric characteristics of the system define the parameters of air production at the WECO.
**The diameter of the pulley d.** This parameter along with the amplitude of the body oscillation defines the number of piston travels per wave period.
**The disk diameter $d_e$.** Defines the length of piston travel
**The diameter of the chamber da or respectively the cross section area of the chamber A.** Defines the quantity of air per ramming, but also the maximum pressure that can be achieved inside the chamber of the reciprocating pump. The pressure inside the chamber determines the force which is transferred to the body and according to equation (6) the amplitude of the body oscillation.
It is therefore established a cyclic relation among the geometric characteristics of the system and the mass of the floating body along with the characteristics of the waves which prevail in the area of installation. The aim in solving this cyclic relation is the achievement of the desired pressure in which the system has to operate and the maximization of the air quantity that is produced in the reciprocating pumps at that pressure.
A first criterion for choosing the operational pressure depends whether the storage of air in air tanks at the sea bottom is desirable or not If storage is desirable the pressure of operation is defined by the water depth or the depth of storage. If the storage depth is h the storage pressure and respectively the operation pressure is given by the relation:

$$P = \rho g h \tag{9}$$

Where:

p: the density of the water

g: the acceleration of gravity

h: the depth of storage

The operation pressure in this case should be $P_1 > P$.

If no storage is desirable the operation pressure can be chosen in relation with the characteristics of the air turbine and the optimization of its performance.

In relation with the unit for wave energy transformation which was described before and which represents the basic element of the proposed system the following can be noted:

- The proposed system exploits both phases of wave oscillation, as is happened with the Well's air turbine. However the WECO is doing that at the stage of air production and not at the stage of air expansion.

- The production of air under controlled conditions of pressure gives the following capabilities:

    o To use a unidirectional air turbine with better performance and operation with low cost.

    o Collection of the air that is produced in a number of columns in one air storage tank and expansion of that air in one air turbine.

    o The collection of air from a number of columns gives the capability of constructing the system with a great number of columns of small size which are distributed in the wave field in a way that a better exploitation of the wave energy is achieved.

- The proposed system produces air in such a pressure which allows storage in air tanks in the sea bottom.

- The storage of air in air tanks at the sea bottom is one of the basic capabilities of the proposed system since it can normalize the electricity production during the day according to the demands and can exploit the daily temperature difference.

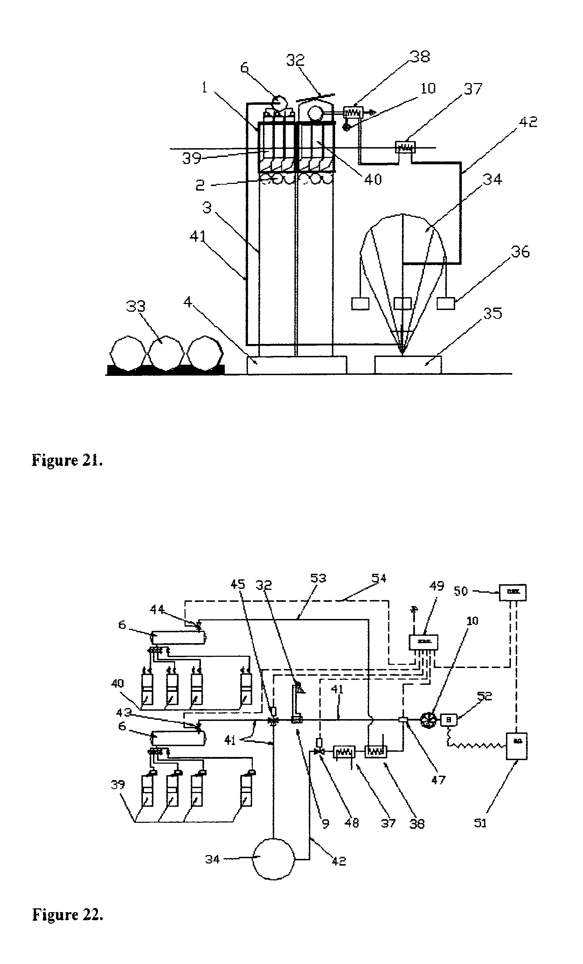

Figure 21 gives schematically a unit for energy production. It can be seen the platform of intensive flotation with the steel network (1), the floaters (2), the anchoring lines (3) and the gravity anchors (4). In this particular case two standard platforms are connected in parallel in a way that the exploitation of the wave field is enlarged. It also can be seen the columns for air production (5) of WECO type, the air tank (6) for collection of air from the columns which are distributed in the platform, the solar mirrors (32) for heating the air and the sea bottom air tanks which serve for the temporary storage of the air produced in the WECO's. The air tanks are of classic design with firm housing (33) or of balloon type (34) as it is shown in figure 16.

The proposed type of air tanks is that of the balloon (34) like those which are used in hoisting big weights, due to the fact that they give the capability for storing big quantities of air at low cost. The shell of such a balloon is elastic, capable of creating big storage space. The elasticity of the balloon shell makes it sensitive to the pressure that the water exerts on it keeping the pressure inside them constant. During the storage phase then, the

WECO works under constant pressure conditions, which is a design element of the system, as it was mentioned before.

In figure 21 it can be seen the way the balloon is retained at the sea bottom with gravity anchors (35), while suspended weights contribute to their anchoring retaining the balloons at the sea bottom when empty.

During the phase of using the stored air for its expansion at the air turbine for producing electricity, the water plays the role of the air pump which drives the air to the air turbine at constant pressure.

From preliminary calculations a column of WECO type, like the one designed here can produce air at 3 bar pressure at quantities of about 12 $m^3$/h at wave conditions of 1.5 m height and of 4 sec period.

With the same assumptions a module of 12 meters with a proper distribution of columns can produce 240 m /h of compressed air at 3 bar pressure. This air quantity at atmospheric conditions would have a volume of 1000 m .The energy that is required for this air compression, with the assumption of isothermal compression, is about 35000 joule/sec which is equivalent of 3.5 KW per running meter of installation. This energy is paid by the wave and is equivalent to a degree of wave energy retrieval more than 30% of total energy that is entrapped in the wave field under the conditions that were set before. The degree of wave energy retrieval can be increased considerably with the increase of the width of the installation and the increase of the number of columns per running meter of the installation.

Of course, gradually, with the increase of the width the columns that are set far from the wave front will have reduced effectiveness. This reduction, however, is a function of the wave period. At small wave periods the reduction will be significant, while at large wave periods the columns will operate without any significant reduction of their effectiveness. These remarks suggest that for each specific area of installation a thorough and systematic study of the wave field is necessary so that the design of the particular installation will be optimized.

Any how the degree of energy retrieval is quite high, in general, however, this is a function of the wave height and wave period. At high waves, associated in general with large periods the degree of retrieval can go down to less than 20%. In these cases the increase of the width of the installation, as it was mentioned before, can significantly increase the energy retrieval.

However it is very important to be mentioned that at small wave heights and small periods, when the available energy in the wave field is small the degree of retrieval increases. The importance of this remark is strengthened if one can study the wave climate of a certain area during a year. Table 2 gives the distribution of the frequency of occurrence of wave heights and periods during a year worldwide. In table 3 the same data are translated in durations, in hours per year, while in table 4 the same data are translated in energy content of the wave field in KWh per year. From the last table it is obvious that in a certain area in the region of wave heights between 1.5 and 5.5 m and for periods between 4 and 8.5 sec it is included more than 80 % of the total wave energy with the biggest part to be distributed at short periods and small wave heights. This trend is more pronounced in closed seas as is Aegean.

**Table 2: % annual frequency of occurrence of wave heights (lines) and periods (columns) worldwide**

| | 2.50 | 6.5 | 8.5 | 10.5 | 12.5 | 14.5 | 16.5 | 18.5 | 20.5 | over 21 | Total |
|---|---|---|---|---|---|---|---|---|---|---|---|
| **0.-1** | 24.047 | 4.6416 | 0.9954 | 0.3316 | 0.1253 | 0.044 | 0.0245 | 0.0147 | 0.1041 | 0.548 | 30.876 |
| **1-2** | 15.5208 | 17.0941 | 6.1091 | 1.7475 | 0.54948 | 0.1784 | 0.0626 | 0.0175 | 0.0194 | 0.091 | 41.390 |
| **2-3** | 1.3763 | 6.0543 | 6 | 2.6736 | 0.8712 | 0.2668 | 0.0778 | 0.0188 | 0.0054 | 0.0057 | 17.350 |
| **3-4** | 0.2008 | 1.2153 | 2.1165 | 1.6245 | 0.7848 | 0.2611 | 0.0817 | 0.0226 | 0.0026 | 0.003 | 6.313 |
| **4-5** | 0.0506 | 0.3278 | 0.6969 | 0.6998 | 0.4151 | 0.1726 | 0.0687 | 0.0196 | 0.0033 | 0.002 | 2.456 |
| **5-6** | 0.0187 | 0.0604 | 0.1469 | 0.1614 | 0.1063 | 0.0509 | 0.018 | 0.0033 | 0.0012 | 0.0014 | 0.569 |
| **6-7** | 0.0158 | 0.0587 | 0.1275 | 0.1551 | 0.1039 | 0.049 | 0.0215 | 0.0039 | 0.001 | 0.0011 | 0.538 |
| **7-8** | 0.0032 | 0.024 | 0.0622 | 0.0702 | 0.0501 | 0.0249 | 0.012 | 0.0026 | 0.0008 | 0.0012 | 0.251 |
| **8-9** | 0.0028 | 0.0102 | 0.0266 | 0.038 | 0.0311 | 0.0169 | 0.0084 | 0.0018 | 0.0013 | 0.0011 | 0.138 |
| **9-10** | 0.0013 | 0.0064 | 0.0182 | 0.0308 | 0.0247 | 0.0174 | 0.0093 | 0.0041 | 0.0022 | 0.0012 | 0.116 |
| **10-11** | | 0.0003 | 0.0002 | 0.0006 | 0.0006 | 0.0003 | 0.0001 | 0.0001 | | | 0.002 |
| **11 +** | | 0.0003 | 0.0001 | 0.0004 | 0.0007 | | | 0.0001 | | | 0.002 |
| | 41.2373 | 29.49 | 16.30 | 7.53 | 3.06 | 1.08 | 0.38 | 0.11 | 0.14 | 0.66 | 100.00 |

**Table 3: Duration in hours of wave conditions of height and period in an annual base**

|        | 2.50  | 6.5   | 8.5  | 10.5 | 12.5 | 14.5 | 16.5 | 18.5 | 20.5 | over 21 | Total |
|--------|-------|-------|------|------|------|------|------|------|------|---------|-------|
| 0.-1   | 2,107 | 407   | 87   | 29   | 11   | 4    | 2    | 1    | 9    | 48      | 2705  |
| 1-2    | 1,360 | 1,497 | 535  | 153  | 48   | 16   | 5    | 2    | 2    | 8       | 3626  |
| 2-3    | 121   | 530   | 526  | 234  | 76   | 23   | 7    | 2    | 0    | 0       | 1520  |
| 3-4    | 18    | 106   | 185  | 142  | 69   | 23   | 7    | 2    | 0    | 0       | 553   |
| 4-5    | 4     | 29    | 61   | 61   | 36   | 15   | 6    | 2    | 0    | 0       | 215   |
| 5-6    | 2     | 5     | 13   | 14   | 9    | 4    | 2    | 0    | 0    | 0       | 50    |
| 6-7    | 1     | 5     | 11   | 14   | 9    | 4    | 2    | 0    | 0    | 0       | 47    |
| 7-8 0  | 0     | 2     | 5    | 6    | 4    | 2    | 1    | 0    | 0    | 0       | 22    |
| 8-9    | 0     | 1     | 2    | 3    | 3    | 1    | 1    | 0    | 0    | 0       | 12    |
| 9-10   | 0     | 1     | 2    | 3    | 2    | 2    | 1    | 0    | 0    | 0       | 10    |
| 10-11  |       | 0     | 0    | 0    | 0    | 0    | 0    | 0    |      |         | 0     |
| 11 +   |       | 0     | 0    | 0    | 0    |      |      | 0    |      |         | 0     |
|        | 3612  | 2583  | 1427 | 659  | 268  | 95   | 34   | 9    | 12   | 57      | 8760  |

**Table 4. Distribution of wave energy in an annual base**

|        | 2.50   | 6.5    | 8.5    | 10.5   | 12.5   | 14.5   | 16.5  | 18.5  | 20.5  | 21    | Σύνολο  | %      |
|--------|--------|--------|--------|--------|--------|--------|-------|-------|-------|-------|---------|--------|
| 0.-1   | 1,225  | 648    | 182    | 75     | 34     | 14     | 9     | 6     | 46    | 247   | 2484    | 0.84   |
| 1-2    | 7,498  | 21,470 | 10,034 | 3,546  | 1,327  | 500    | 200   | 63    | 77    | 369   | 45083   | 15.21  |
| 2-3    | 1,847  | 21,123 | 27,375 | 15,068 | 5,845  | 2,077  | 689   | 187   | 59    | 64    | 74334   | 25.08  |
| 3-4    | 528    | 8,311  | 18,927 | 17,945 | 10,321 | 3,983  | 1,418 | 440   | 56    | 66    | 61994   | 20.92  |
| 4-5    | 220    | 3,705  | 10,302 | 12,779 | 9,024  | 4,352  | 1,971 | 631   | 118   | 73    | 43175   | 14.57  |
| 5-6    | 121    | 1,020  | 3,244  | 4,403  | 3,452  | 1,917  | 772   | 159   | 64    | 76    | 15228   | 5.14   |
| 6-7    | 143    | 1,384  | 3,932  | 5,909  | 4,712  | 2,578  | 1,287 | 262   | 74    | 84    | 20367   | 6.87   |
| 7-8    | 39     | 754    | 2,554  | 3,561  | 3,025  | 1,744  | 957   | 232   | 79    | 122   | 13066   | 4.41   |
| 8-9    | 43     | 411    | 1,403  | 2,476  | 2,412  | 1,521  | 860   | 207   | 165   | 143   | 9642    | 3.25   |
| 9-10   | 25     | 322    | 1,199  | 2,507  | 2,393  | 1,956  | 1,189 | 588   | 350   | 195   | 10724   | 3.62   |
| 10-11  |        | 18     | 16     | 60     | 71     | 41     | 16    | 18    |       |       | 240     | 0.08   |
| 11+    |        | 0      | 0      | 0      | 0      |        |       | 0     |       |       | 0       | 0.00   |
|        | 11690  | 59168  | 79167  | 68327  | 42616  | 20682  | 9367  | 2790  | 1088  | 1441  | 296336  | 100    |
| %      | 3.94   | 19.97  | 26.72  | 23.06  | 14.38  | 6.98   | 3.16  | 0.94  | 0.37  | 0.49  | 100.00  |        |

The capability of the proposed system for temporary storage of compressed air in air tanks is equivalent with a capability for temporary storage of energy at periods of the day with low demand and gives it at peak periods. This capability is very important and is introduced for the first time in the field of the renewable energy sector.

However the temporary storage of energy in the form of compressed air is introduced with a dual purpose of exploiting an additional energy source which is the daily difference of temperature.

As it was mentioned before the daily difference of temperature at the earth surface is about 10 to 15 °C. This difference is valid in all regions of the world at all times during the year.

In the example that was mentioned before, a module of 12 meters long and 3 meters width with 20 columns of WECO type can produce 2500 m3 of air at 3 bars pressure during eight hours of operation under the assumed wave conditions. This air with the assumption of isothermal compression embodies energy of about 300 KWh. Assume that this air is produced during the night at low environmental temperatures, it is temporary stored at the sea bottom and it is used during the day at temperatures 10 °C higher than during its production. In addition we assume that during its expansion the air recovers the temperature of the environment therefore 10 °C higher, the energy that is added to it is more than 450 KWh that means much higher than the energy which was recovered from the wave itself.

Of course the final balance has to be on a wide time period taking into account the long lasting wave climate of the area, the effectiveness of the system of retrieving wave energy and the ways for exploiting the daily temperature difference. However it is obvious from the previous example that this source is of great significance and has additional advantages having a pronounced stability all year round in contrast with wind and wave energy which present intense fluctuations having a stochastic character.

From the information given before it is obvious that the required volume of storage tank for the temporary storage of air which is produced during a period of the day (5 or 8 hours) is very large. It comes out therefore that the proposed air tanks are a practical solution, easily materialised and with additional positive effects on the operation of the system.

During storage, the air acquires the temperature of the water at the sea bottom. This temperature is maintained at low values with smaller fluctuations compared with the air due to water large heat capacity. This temperature can be lower than the respective air temperature during the night hours, when the storage takes place or greater depending on the season and the meteorological data of the moment. If the temperature of the water is lower of that of the air, during storage, energy content is extracted from the stored air but its volume is reduced reducing thus the required storage space. If, on the contrary, the water temperature is greater energy is added to the stored air.

The air tanks of this type present a huge volume and large forces due to sea currents are exerted on them, if they are present in the area of installation. This has to taken into account for the anchoring calculations. However the forces from the waves are expected to be small at the depth which the tanks are indented to be installed. It is envisaged that their installation does not present significant technical difficulties and it can be materialised with current technological levels.

According to the above an important element of such an installation would be the capability of the stored air to recovering the temperature of the environment during expansion at the air turbine.

To this end heat exchangers of various types can be used, like exchangers water to air, using surface water as a heating means (37) and exchangers air to air (38) using air produced either at the main columns or at ancillary columns. Figure 13 shows air ducts (41) leading the air to the storage air tanks and those (42) leading the air from the air tanks to the air turbine.

It has been mentioned before that the proposed system has the capability to exploit multiple renewal sources of energy using the air produced at the columns as the under layer on which energy is added from different sources. In this framework it was described before the exploitation of the daily difference of temperature as a basic source of energy, at least equivalent with the energy produced from the waves.

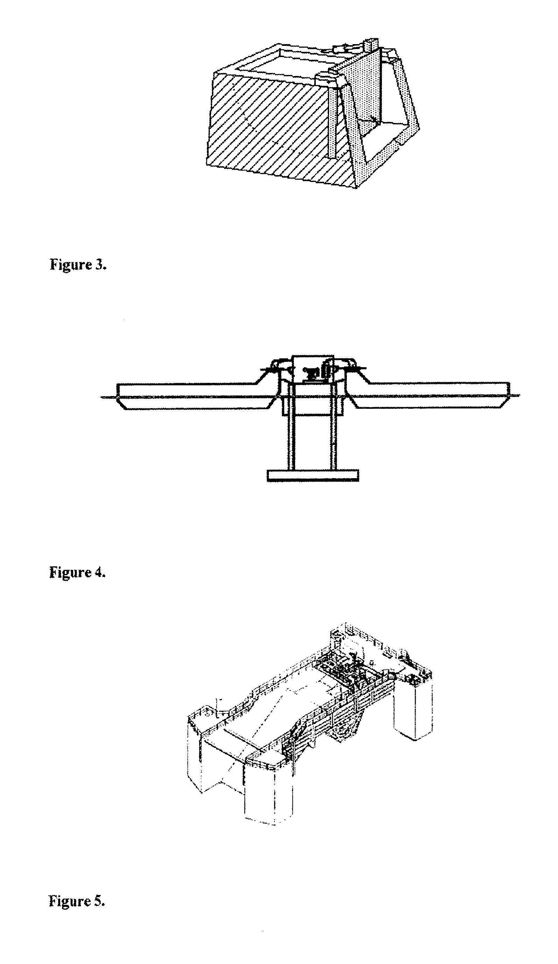

In the same way solar energy at its simplest form i.e. heating of water or other proper means at solar cells, which in turn, heats the air at air to air heat exchangers, before its expansion at the air turbine. Figure 16 shows schematically the solar mirrors (32), while figure 3 shows the water to air heat exchangers (9) which heats the air with water or other proper means which has been heated before at the solar cells.

Figure 22 gives the operation diagram of the proposed system. The diagram corresponds to a module of an installation like the one shown in figure 21. Referring to those two figures it can be seen the columns of WECO type (39) which produce air of proper pressure to be stored at the sea bottom air tanks (34), ancillary columns (40) which produce air of low pressure to be used at air to air heat exchangers for heating the stored air, the intermediate air tank for collecting the air from all the columns (6), control valves for monitoring the operation pressure of the network (43), and (44), triode electromagnetic valve regulating the flow of the produced air (45). The valve directs the air either for expansion to the air turbine, or to the air tanks depending on the chosen scenario of operation. The sea bottom air tanks (34) are of a balloon type of proper storage capacity. The solar cells (32) heat water or other proper means in a closed loop and feeding the heat exchanger (38) which heats the air before its expansion. Similar exchanger (46) can be fed from the difference of the water temperature between the surface and sea bottom. The air produced at the WECO can be expanded directly at the air turbine after it flows through the exchangers which were mentioned before and which add energy to it. It can however through the mixer (47) to be mixed with the stored air and be directed to the air turbine. The stored air expands to the air turbine by opening the electromagnetic valve (48). The valve regulates at the same time the quantity of air which is allowed to be expanded at the constant pressure prevailing at the depth of storage. The air flows through a water to air heat exchanger (37) which is materialised very easily with a tube of serpentine shape through which the air is flowing. It follows an air to air heat exchanger which is fed from the ancillary columns of OWC type (40). Through the heat exchangers that described just before the stored air can recover more than 80% of the daily difference of temperature, increasing significantly its energy content, as was mentioned before.

Based on the previous description the proposed system can operate at the simplified scenario «8-8-8». According to this, for a period of 8 hours, during the night, with low electricity demand and low temperatures of the environment the system operates by storing air in the bottom air tanks. The next 8 hours air stored in the air tanks and air produced at the WECO is expanded at the air turbines producing electricity. The simultaneous production of electricity using both sources increases significantly the power of the produced electricity at the critical period of high demand. The next 8 hours electricity is produced from the air produced at WECO at that moment.

In a different scenario the stored air is used in a way that the produced energy is increased, but also smoothing the electricity production for a period larger than the 8 hours mentioned before. In this case the electromagnetic valve (48) is controlled by the control centre (49) in such a way that to free the required air quantity so that the conditions at the air turbine are kept constant.

In the contrary the stored air can be consumed in a shorter period covering peak demands. All these different scenarios can become the basis for the initial design of the system choosing its basic dynamic and geometrical characteristics, while they can become the basis for a central control system which will monitor the wave and the meteorological conditions, it will take into account input about demand and it will optimise its operation. Under the assumptions set before, in a mean wave field and with a scenario of operation 8-8-8 as described before the described system can produce a mean day power about 7 KW per meter of installation with peak power 18 KW per meter, In the above has not been included power from other sources as is solar which increase even more the produced electricity.

Such an installation with 100 meters in length would be able to completely cover the needs of a small Aegean island with 3000 inhabitants or a small town of similar size, or even an autonomous offshore installation, such as a fishing farm.

As it was mentioned before the proposed system along with producing electricity can also play other roles. Important such a role is the protection from the waves.

From the previous descriptions it is obvious that the columns absorb a significant part of the wave energy functioning as wave absorbing cells. Part of the wave energy is also destroyed on the platform and on the columns themselves, producing forces that are exerted on the installation. Wave absorbing cells of various types have been developed in the framework of the previously mentioned patent with number 1003786, which has been patented by the inventor and the company Martech engineering SA. Basic such absorbing cell is the cell of the fin type.

In addition the platform which was developed for the wave absorber as well as for the proposed system for electricity production from waves, presents some important flexibilities which allow the creation of extended installations in the sea. More specifically the platform can be standardized in various dedicated modules with specific function each one and can be produced under manufacturing conditions. Basic attribute of the modules is its interconnectivity, the capability to be connected in parallel or in line in an easy and flexible way. This will allow different modules to be connected and form the desired installation its shape, length, width, but also it's functioning. Typical modules include: Those that carry columns of WECO type, which are the main energy producers. Those that carry columns of OBC type, which produce compressed air of low pressure for producing energy but mainly for ancillary operations, like the feeding of the air to air heat exchangers for heating the stored air. Another type of module carry absorbing cells operating as pure wave absorber, while the fourth type is a simple platform aiming to just form a working area and for the carrying the necessary equipment.

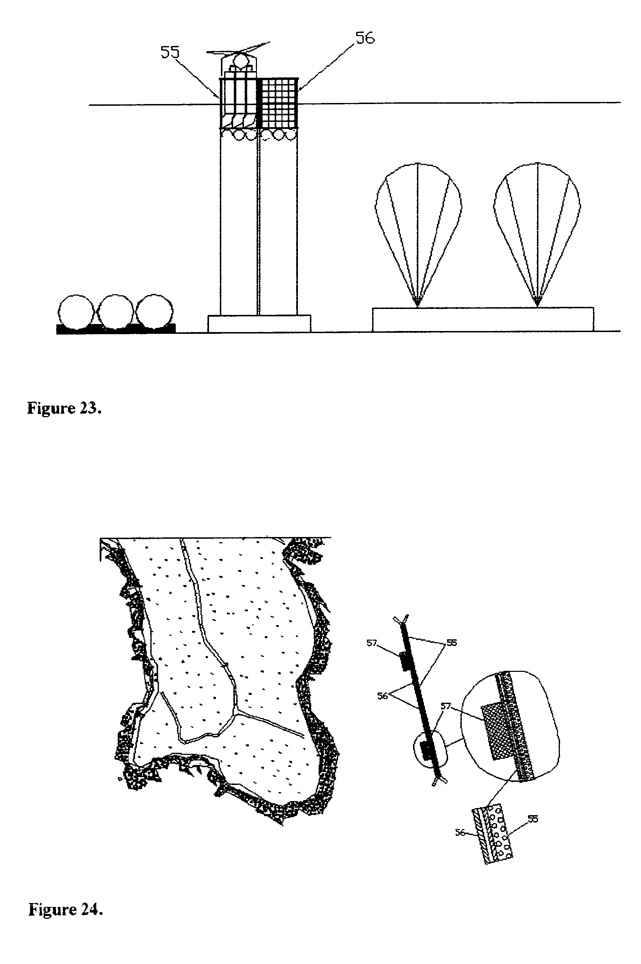

Figure 23 gives a cross section of an installation with two modules connected in parallel. The first module (55) is the energy producing part at the windward side and caries columns and installations for producing energy, while the second (56), in the leeward side, carries wave absorbing cells.

Figure 24 gives an installation along a coast. The modules that form this installation are similar to those in figure 23 and can produce energy, while they offer protection to the coast from the erosion action of the waves. In this figure it can be seen energy producing modules (55), wave absorbing modules (56), and modules offering working area and on which equipment is installed, as well as small houses for the personnel, for storage needs etc.

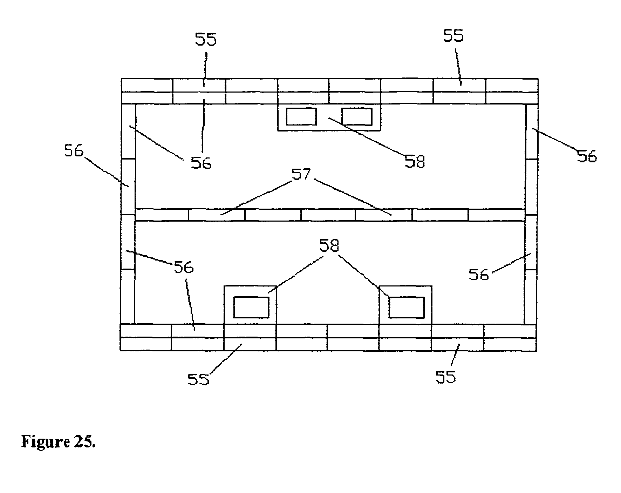

In a similar way, arrangements like the one of figure 23 can be used for creating port facilities or for the protection of offshore installations. Figure 25 gives an open sea fishing cage with total dimensions 100x70 meters which is formed by modules of intensive flotation. The modules can carry wave absorbing cells offering controlled protection to the whole installation; they can also carry columns for electricity production for the needs of the fishing farm. In the fishing cage of figure 25 it can be seen modules that produce electricity (55), modules for wave absorbing (56), simple modules for working area creation (57) and also modules that carry equipment and installations of the fishing farm (58).

From these two applications which were described before it is evident the capability for creating extended installations in the sea which can combine multiple applications. Energy production, self protection, but also creating areas protected from the waves, extended working areas capable for carrying heavy payloads. The working areas can accommodate installations for energy production, storage, personnel accommodation, port facilities for the easy connection of the installation with mainland etc.

The above described capabilities are due to the proposed platform and its characteristics. It consist of a standardized modular construction, produced under factory conditions, easily installed and connected with each other, easily replaced in a similar way without affecting the whole operation, easily extended with addition of new modules or changing the shape, while they have multiple functioning (carry energy production units, wave absorbing cells et.). The platform is constructed in a composite way utilizing materials and construction methods that can offer strength (steel, space networks), protection from corrosion (hot deep galvanized), composite materials like HDPE, PVC etc, for the construction of the floating system, columns, air tanks etc which are inactive with the corrosive sea environment, with low weight and long duration life, low maintenance demands.

Taking into account that in the renewal energy sector the big part of the total cost is the initial cost of the investment, the proposed here multiple use of the installation distributes the costs in a way that the cost of the produced electricity is reduced considerably.

From preparatory calculations the proposed system can produce electricity with cost per KWh less than 3 cents of the dollar, without considering other uses in parallel. These costs can only be compared with large scale installations burning natural gas or of combine circle, according to data given before.

This cost is dramatically reduced in large scale installations and if one considers also the flexibility of the system to cover local needs in remote areas where both the production cost and the cost for transferring electricity is huge and of course if one considers also the exploitation of the installation for other uses as was mentioned before.

The proposed system can produce electricity in stable conditions more than any other system that has been proposed so far in the renewable energy sector. However it still is based on non stable source of energy, as is the waves, like all the other renewable sources of energy and therefore is based on unstable production conditions which are not always in line with demand. For tackling this inherent weakness it has been proposed, by many researchers, the use of the renewable sources of energy for the production of hydrogen which arises as the fuel of the future, especially in the transportation sector. The proposed system consist a very serious solution for very cheap hydrogen production mainly due to the flexibility of the proposed platform to form extended working areas with the capability to carry large loads and to combine the capability of producing energy with the capability for wave absorption so that the whole installation is self protected.

**TABLE OF FIGURES**

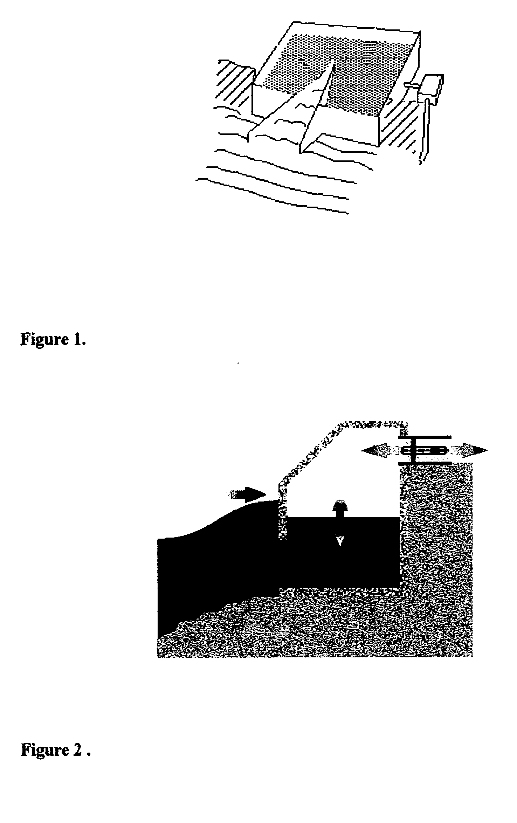

Figure 1. The Tapchan device

Figure 2. The device type ....

Figure 3. The "McCabe wave Pump"

Figure 4. The "McCabe wave Pump"

Figure 5. The floating "wave Power Vessel"

Figure 6. Schematic presentation of the proposed platform for the system of electricity production from waves.

Figure 7. The basic elements of the proposed platform

Figure 8. General arrangement of the basic module of electricity production from waves

Figure 9. An alternative arrangement of the module with a different floating system with the capability of using very long columns.

Figure 10. Typical form of the Oscillating water Column (OWC)

EP 1 734 255 A1

Figure 11. Typical form of an Oscillating Body Column (OBC)

Figure 12.An OBC that function's as a wave absorbing cell

Figure 13.An OBC that function's as air compressor

Figure 14.The form of the Wave energy Converter (WECO)

Figure 15. An alternative form of the WECO

Figure 16. Schematic operation of the WECO

Figure 17. Schematic alternative operation of the WECO

Figure 18. Harmonic wave record and motion of the oscillating body in the time domain

Figure 19. The time variation of pressure in the two parts of the chamber of the reciprocating pump which is driven by the oscillating body inside the column.

Figure 20. The time variation of volume in the two parts of the chamber of the reciprocating pump which is driven by the oscillating body inside the column.

Figure 21. Schematic presentation of a complet installation for electricity production from waves.

Figure 22. Operating diagram of electricity production from waves

Figure 23. Arrangement combining modules for electricity production and modules for wave absorbing

Figure 24. Schematic arrangement of an application combining electricity production and shore protection from waves.

Figure 25. Open sea fishing gage with self production of electricity from waves.

**Claims**

1.  System for production of electricity from waves based on units of wave energy converters (WECO) (39) which produce compressed air at high pressure, they exploit both phases of the periodical motion of the wave, reducing the volume of the produced air and making it technically possible for temporary storage of the produced air, which uses intermediate air tank (6) for collecting the air from a group of columns in a way that it is possible to use a unidirectional air turbine (10) and of high effectiveness for the production of electricity, which uses simple columns of oscillating body (OBC) (40) which produce air of low pressure to feed air to air heat exchangers (37) to heat the stored air, which use the produced air as the under layer to enhance its energy content from other renewable energy sources and mainly the solar energy through solar mirrors (32), the energy entrapped in the masses of the sea water due to the difference of temperature between the sea surface and sea bottom, and the energy due to the daily difference of temperature, with capabilities for temporary storage of the produced energy in the form of compressed air which is stored in air tanks installed at the sea bottom (34) which uses as a carrier for installing the production equipment a body (platform) of intensive floatation with vertical anchoring lines, modular, which is composed by standardised modules 955) which are connected together to form the complete installation foe electricity production, which can function as wave absorber while its modules can be connected with other similar modules of a classical wave absorber 956) in a way that in parallel with the electricity production they can offer protection from waves.

2.  System for electricity production from waves according to claim 1 which is installed on a carrier completely standardised which consists of an body in intensive floatation, anchored with vertical anchoring lines under tension (tension leg) with excessive buoyancy which is formed by a space network (1), the system for buoyancy production (floaters) (2) which in a situation of complete immersion produce buoyancy greater than its self weight, the weight of the equipment and the payload that carries, the vertical anchoring lines (3) and the gravity anchors (4). The body at its working position functions as an inverted pendulum with natural periods which can be tuned to be outside the band of wave periods. The modules are connected together with joints of parallel and longitudinal connectivity and which allow to create the proper shape of the installation which can exploit in an optimum way the wave front, it will secure the necessary equipment and it will form the necessary working area it will secure the access to all points of the installation and with the capability to carry except the equipment for electricity production, wave absorbing cells or simply be a working platform for the needs of the system.

3.  System for electricity production from waves according to claim 1 with capabilities for exploiting multiple sources of renewable energy using the compressed air that is produced at the WECO (39) as the under layer for the incorporation of energy from other renewable sources such as is the solar energy in a way that the energy potential of the air is increased achieving condensing of the produced energy from the same installation.

4.  System for electricity production from waves according to claim 1 which can exploit the capability for temporary storage of the compressed air in air tanks at sea bottom (34) in a way that it can, according to claim (3) exploit the daily difference of temperature as a big additional source of energy, to use this energy at the peak demand period of the day and to achieve stability in energy production in large periods of the day.

5.  System for electricity production from waves according to claim 1 which is based on the converters of wave energy (WECO) (39) for the production of compressed air of high pressure (39). The WECO consist of tubes (11) vertically installed within the body of the carrier according to claim 2, semi immersed in the water, open at their lower end within which a floating body is fluctuating under the action of the waves. The reciprocating movement of the body inside the column is transformed to rotational movement either with a mechanism of a belt which drives a pulley (19), or with a mechanism of endless screw (20) which drives a horizontal disk (21). The pulley or the disk, through a rod 923) drive a piston (26) of a reciprocating air pump of double action which compresses air at the proper pressure. The compression pressure is defined by the valves (30) and (31) by setting the pressure at which they open. The air from the air pumps flows to the air tanks of intermediate storage (6) and from there either to the air turbine (10) for electricity production, or to the air tanks for temporary air storage (34) for a later use for electricity production.

6.  System for electricity production from waves according to claim 1 which uses columns of oscillating body (OBC) (40) for the production of compressed air of low pressure to be used for the heating of the stored air in the air tanks of the bottom. The OBC consist of tubes (11) made of PVC or HDPE or similar composite materials, installed vertically within the body of the carrier semi immersed in the water, open at their lower end so that the water is coming and going freely and closed at its upper end, inside which a body (13) is oscillating and which is functioning as a piston. The column bears a non return inlet valve (15) which sucks air from the environment and a non return outlet valve (16) which compresses the air to an air tank of low pressure for intermediate gathering of the air. From the air tank the air is led to the heat exchangers (37), (38) for heating the stored air in the air tanks of the sea bottom (34).

7.  System for electricity production from waves according to claim 1 which uses air tanks (6) of intermediate storage of air which is produced at the WECO's (39) but also at the simple Oscillating Body Columns (OBC) (40) in such a way that both directions of movement of the oscillating body are exploited in the production of compressed air which is able to do so with the aid of a non return valves (30), (31) which connects the WECO (39) with the air tank (6) and which valve is tuned so that it opens either at a predefined pressure, either at a pressure that is monitored through a system of automatic control, depending on the prevailing wave conditions, or finally when the pressure in the pressurizing chamber of the reciprocating pump is becoming equal to the pressure in the intermediate tank and which system gives the capability of using a unidirectional air turbine (10) to produce electricity and which turbine has improved efficiency compared to bidirectional turbine of Well's type.

8.  System for electricity production from waves according to claim 1 which is using air tanks of balloon type (34) capable of storing big quantities of air and installed at the sea bottom or near the sea bottom. The air tanks are made from elastic material of membrane which accepts the pressure of the surrounding water and keeps the stored air at constant pressure equal to the pressure of the water at the depth of storage. The depth air tank is anchored at the sea bottom with gravity anchors (35) while additional weights (36) hold it at the sea bottom when empty.

9.  System for electricity production from waves according to claim 1 which in addition to produce electricity it can be used for the creation of port installations, installations for the protection of coasts from the waves or other offshore installations like fishing farms which achieves that by joining together modules that produce electricity in parallel with modules that function as wave absorbers (56) or simple modules of vertical anchorages and which connected together in parallel or longitudinally can form the required overall installation.

**Figure 1.**

**Figure 2.**

Figure 3.

Figure 4.

Figure 5.

Figure 6.

Figure 7.

Figure 8.

Figure 9.

**Figure 10.**

**Figure 11.**

**Figure 12.**

**Figure 13.**

Figure 14.

Figure 15.

**Figure 16.**

**Figure 17.**

"MEKYEN" TIME DOMAIN SIMULATION

WAVE    BODY

**Figure 18 :**

AIR PRESSURE WITH TIME

**Figure 19 :**

AIR VOLUME WITH TIME

**Figure 20 :**

Figure 21.

Figure 22.

**Figure 23.**

**Figure 24.**

Figure 25.

**European Patent Office**

## EUROPEAN SEARCH REPORT

Application Number

EP 06 38 6014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 464 080 A (GORLOV ET AL) 7 August 1984 (1984-08-07) * the whole document * | 1,3,9 | INV. F03B13/26 |
| A | US 6 100 600 A (PFLANZ ET AL) 8 August 2000 (2000-08-08) * the whole document * | 1 | |
| A | US 4 095 423 A (GORLOV ET AL) 20 June 1978 (1978-06-20) * the whole document * | 1 | |
| A | US 4 103 490 A (GORLOV ET AL) 1 August 1978 (1978-08-01) * the whole document * | 1 | |
| A | US 4 098 081 A (WOODMAN ET AL) 4 July 1978 (1978-07-04) * the whole document * | 1 | |
| A | US 5 551 237 A (JOHNSON ET AL) 3 September 1996 (1996-09-03) * the whole document * | 1 | TECHNICAL FIELDS SEARCHED (IPC) F03B E02B F03G |

The present search report has been drawn up for all claims

| Place of search | Date of completion of the search | Examiner |
|---|---|---|
| Munich | 26 September 2006 | Giorgini, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 38 6014

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2006

| Patent document cited in search report | | Publication date | Patent family member(s) | | Publication date |
|---|---|---|---|---|---|
| US 4464080 | A | 07-08-1984 | NONE | | |
| US 6100600 | A | 08-08-2000 | DE | 19714512 A1 | 15-10-1998 |
| US 4095423 | A | 20-06-1978 | NONE | | |
| US 4103490 | A | 01-08-1978 | NONE | | |
| US 4098081 | A | 04-07-1978 | NONE | | |
| US 5551237 | A | 03-09-1996 | US | 5461858 A | 31-10-1995 |

EPO FORM P0459

For more details about this annex : see Official Journal of the European Patent Office, No. 12/82